# EUROPEAN PATENT APPLICATION

(11) **EP 4 243 239 A1**
(43) Date of publication of application: **13.09.2023**
(21) Application number: 23159523.2
(22) Date of filing: 01.03.2023
(51) Int. Cl.: H02J 7/00

(54) **CHARGER AND BATTERY FOR CORDLESS APPLIANCE**

(30) Priority: 01.03.2022 US 202263315355 P; 19.09.2022 US 202263407933 P; 28.02.2023 US 202318115069
(71) Applicant: Whirlpool Corporation, Benton Harbor, MI 49022 (US)
(72) Inventor: Aditjandra, Antonius K., 21024 Cassinetta di Biandronno (VA) (IT); Arnold, Richard D., 21024 Cassinetta di Biandronno (VA) (IT); Howse, Lynsey A., 21024 Cassinetta di Biandronno (VA) (IT); Kasner, Rebecca K., 21024 Cassinetta di Biandronno (VA) (IT); Kempic, Joy Kathleen, 21024 Cassinetta di Biandronno (VA) (IT); Mock, Brandon Tyler, 21024 Cassinetta di Biandronno (VA) (IT); Myers, John Jay, 21024 Cassinetta di Biandronno (VA) (IT); Schutte, Nicholas Hill, 21024 Cassinetta di Biandronno (VA) (IT); Wang, Yifan, 21024 Cassinetta di Biandronno (VA) (IT); Wilson, Rex D., 21024 Cassinetta di Biandronno (VA) (IT)
(74) Representative: Spina, Alessandro

(57) **Abstract**

A rechargeable battery (10, 210) assembly for a kitchen appliance (2, 202) includes a charging base (14, 214) with a plug (216) according to a standardized connection specification and a body (220) having at least one notch (224). The battery assembly (10, 210) also includes a battery (22, 222) with a receptacle (230) according to the standardized connection specification configured to mate with the plug (216), a plurality of battery terminals (26, 226), at least one flexible tab (232), and at least one button (234). The at least one tab (232) is configured to engage with the at least one notch (224) in the charging base (14, 214) when the battery (22, 222) is fully received in the charging base (14, 214), thereby defining a charging position. The first and second buttons are associated with respective ones of the plurality of tabs. The at least one button is configured to flex the at least one tab (232) to remove the battery (22, 222) from the charging position.

## Description

### BACKGROUND OF THE DISCLOSURE

The present disclosure generally relates to battery-operated kitchen appliances, and, more specifically, to a battery and charging station for a battery-operated kitchen appliance.

### SUMMARY OF THE DISCLOSURE

According to one aspect of the present disclosure, a rechargeable battery assembly for a kitchen appliance includes a charging base and a battery. The charging base includes a plug according to a standardized connection specification and a body having a pair of notches disposed adjacent a perimeter thereof. The battery includes a receptacle according to the standardized connection specification and configured to mate with the plug to selectively engage the battery with the charging base, a plurality of battery terminals, a plurality of tabs, and first and second buttons. The plurality of tabs are configured to move inwardly by initial engagement with corresponding notches in the charging base and to move outward behind the corresponding notches when the battery is fully received in the charging base, thereby defining a charging position. The first and second buttons are associated with respective ones of the plurality of tabs. Further, the first and second buttons are each configured to move the respective tabs inward for release from the notches to remove the battery from the charging position.

According to another aspect of the present disclosure, a rechargeable battery assembly for a kitchen appliance includes a charging base and a battery. The charging base includes a body defining a perimeter edge and a recess therein and a pair of notches disposed adjacent the perimeter edge. The battery includes a plurality of battery terminals disposed within the recess of the charging base, and a receptacle configured to mate with the charging base when the battery is fully received in the charging base, thereby defining a charging position.

According to yet another aspect of the present disclosure, a rechargeable battery assembly for a kitchen appliance includes a charging base and a battery. The charging base includes a plug according to a standardized connection specification and a body having at least one notch. The battery includes a receptacle according to a standardized connection specification and configured to mate with the plug to selectively engage the battery with the charging base, a plurality of battery terminals, at least one flexible tab configured to engage with the at least one notch in the charging base when the battery is fully received in the charging base, thereby defining a charging position, and at least one button associated with the at least one tab, the at least one button configured to flex the at least one tab.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of an appliance having a battery, according to various aspects described herein;
FIG. 2 is a side elevational view of the appliance of FIG. 1 illustrating the battery disengaged from the appliance, according to various aspects described herein;
FIG. 3 is a front perspective view of a rechargeable battery assembly;
FIG. 4 is a rear perspective view of the rechargeable battery assembly of FIG. 3;
FIG. 5A is a side view of the rechargeable battery assembly of FIG. 3;
FIG. 5B is a side view of the rechargeable battery assembly of FIG. 3;
FIG. 6 is an exploded front perspective view of the rechargeable battery assembly of FIG. 3;
FIG. 7 is another exploded front perspective view of the rechargeable battery assembly of FIG. 3;
FIG. 8 is an exploded rear perspective view of the rechargeable battery assembly of FIG. 3;
FIG. 9 is a cross-sectional view of a battery installed within a charging receptacle along line IX-IX of FIG. 3;
FIG. 10 is a cross-sectional view of a battery installed within a charging receptacle along line X-X of FIG. 3;
FIG. 11 is a top perspective view of an appliance having a battery, according to various aspects described herein;
FIG. 12 is a side perspective view of a rechargeable battery assembly;
FIG. 13 is an exploded side perspective view of the rechargeable battery assembly of FIG. 12; and
FIG. 14 is an exploded bottom perspective view of the rechargeable battery assembly of FIG. 12.

The components in the figures are not necessarily to scale, emphasis instead being placed upon illustrating the principles described herein.

### DETAILED DESCRIPTION

The present illustrated embodiments reside primarily in combinations of method steps and apparatus components related to a battery and charging station for a battery-operated kitchen appliance. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

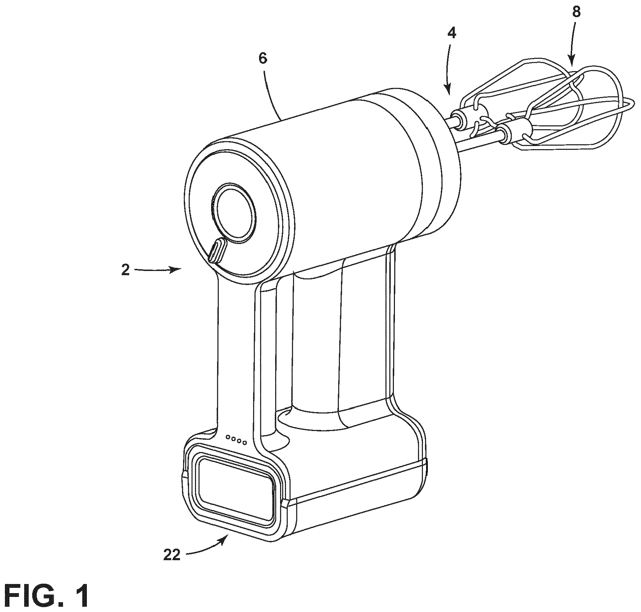

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

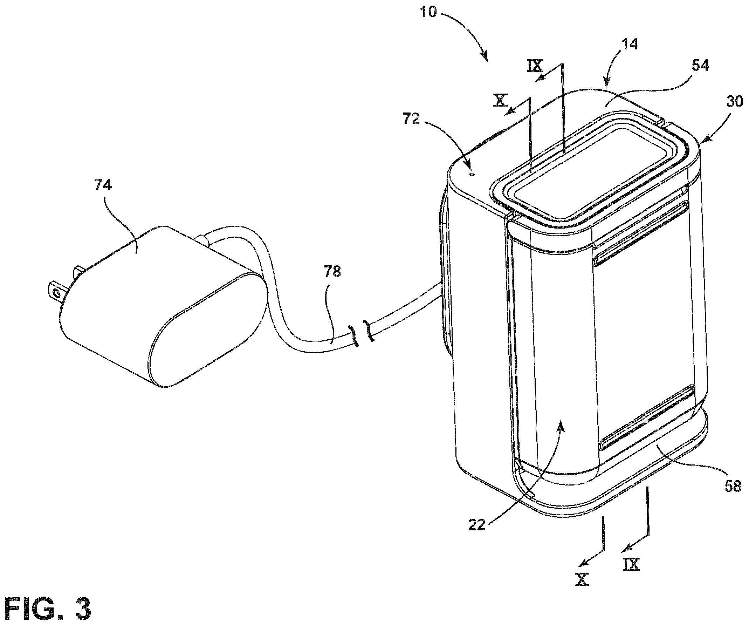

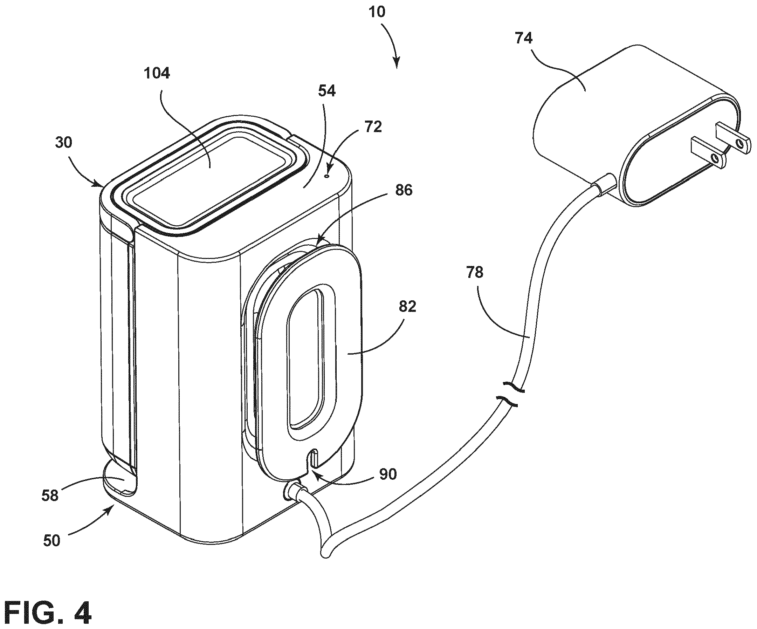

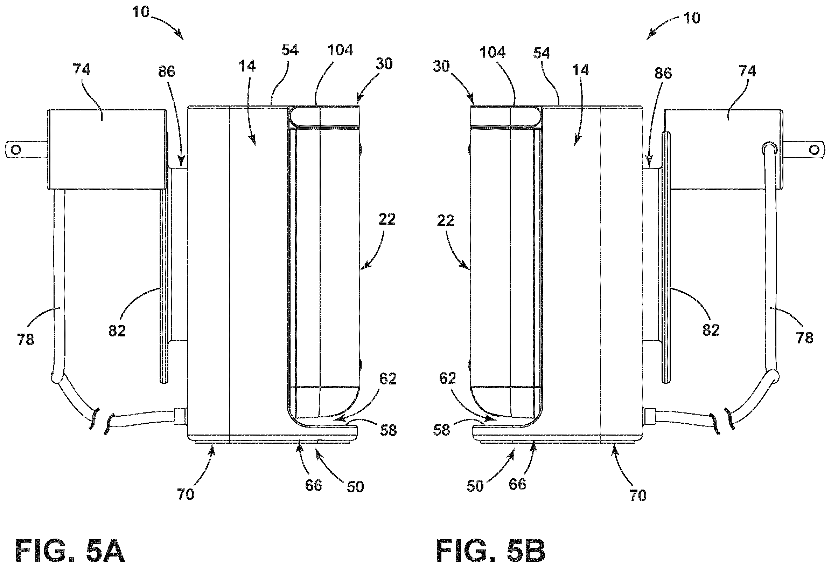

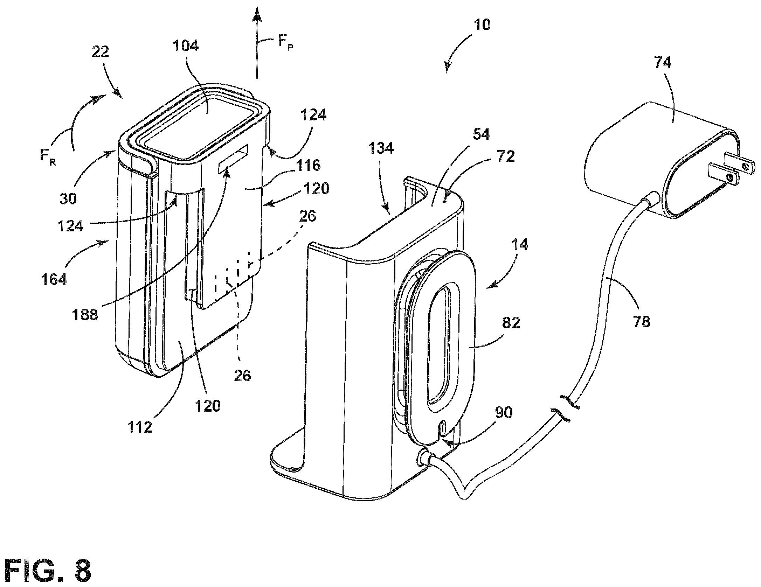

Referring to FIGS. 3-10, reference numeral 10 generally designates a rechargeable battery assembly for a kitchen appliance. The rechargeable battery assembly 10 includes a charging receptacle 14 having a plurality of base terminals 18 and a battery 22 having a plurality of battery terminals 26 configured to mate with the plurality of base terminals 18 to selectively electrically engage the battery 22 with the charging receptacle 14. When engaged, the battery terminals 26 and the base terminals 18 define a charging position that selectively delivers an electrical current from the charging receptacle 14 to the battery 22. The battery 22 includes a handle 30 having a pair of biasing shafts 34 extending from ends 38 thereof. A pair of ramps 42 define a bearing surface 46 configured to contact the pair of biasing shafts 34. When the handle 30 rotationally operates when a user exerts a pulling force thereon, a biasing force is exerted against the pair of ramps 42 that overcomes a charging position engagement force and biases the battery 22 away from the charging receptacle 14.

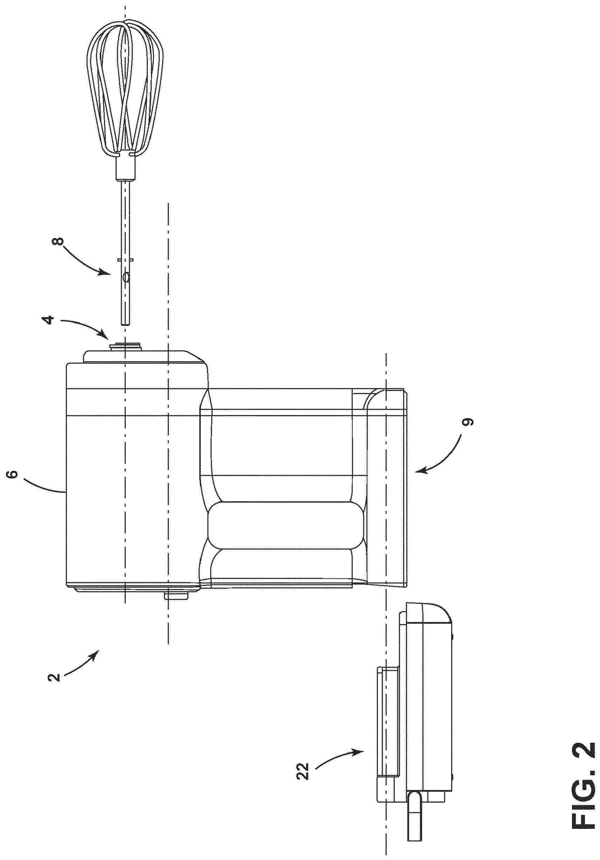

The battery 22 can be removed from the charging receptacle 14 and placed within an appliance 2 in an installed position to provide electrical current to an operable portion 4 of the appliance. Likewise, the battery 22 can be removed from the appliance 2 and placed within the charging receptacle 14 for recharging the battery 22. According to various aspects of the assembly 10 described herein, the battery 22 can be utilized within any one of a variety of cordless appliances 2, including a suite of appliances where the battery 22 can be used interchangeably among particular ones of the suite of appliances. Such appliances 2 can be in the form of various countertop appliances, portable appliances, handheld appliances, and other similar household articles that can be utilized in a cordless and battery-operated configuration. In the example of FIGS. 1 and 2, the appliance 2 is shown in the form of what is generally understood to be a hand mixer, which, in particular aspects, is further described in the co-pending, commonly-assigned U.S. Provisional Patent Application No. 63/315,346 and the U.S. Patent Application filed contemporaneously herewith under Attorney Docket No. SUB-15280A-US-NP, the entire contents of which are incorporated by reference herein. In various additional aspects, the appliance 2 can be in the form of an immersion blender, a food processor, or a blender as respectively described in the co-pending, commonly-assigned U.S. Provisional Patent Applications Nos. 63/315,335, 63/315,338, and 63/315,572, and the U.S. Patent Applications filed contemporaneously herewith under Attorney Docket Nos. SUB-15280B-US-NP, SUB-15280C-US-NP, and SUB-15280E-US-NP, the entire contents of which are respectively incorporated by reference herein.

In the present example, the appliance 2 may include a housing 6 that includes the operable portion 4, which may be in the form of a motor that operates a rotary interface 8. This rotary interface 8 can be in the form of a blade or other processing implement associated with, for example, a blender, mixer, chopper, or other food-processing portion of the appliance 2. The appliance 2 also includes a battery-receiving cavity 9 that is in electrical communication with the operable portion 4. The battery-receiving cavity 9 receives and secures the battery 22 in the installed position. In this way, the battery 22 is selectively engaged with the battery-receiving cavity 9 to define the installed position. The installed position places the battery 22 in engagement with a contact of the battery-receiving cavity 9 for delivering electrical current from the battery 22 to the motor of the operable portion 4. As such, the appliance 2 may include a similar configuration as the charging receptacle 14 in order to accommodate and electrically couple the battery 22. As can be appreciated, the use of the battery 22 to power the drive motor is such that the battery-powered appliance 2 described herein is operable without having to plug the appliance 2 into an external power source (such as a wall outlet or the like) and results in the disclosed appliance 2 being characterized as "cordless". In this manner, the appliance 2 can be placed and operated in any convenient location along the counter space provided within the kitchen, regardless of the proximity of such location to a power outlet or an available power outlet. As shown in FIG. 2, the battery 22 is removably coupled with the housing 6 within the depicted battery-receiving cavity 9 such that a selected battery 22 of, potentially, a number of available compatible batteries 22 (*e.g*., batteries 22 having an identical configuration or a compatible configuration) can be selected and attached with the appliance 2 for powering the operation thereof by way of the electrical connection facilitated by connection of terminals of the battery 22 with terminals of the food processor that are exposed within the battery-receiving cavity 9. In this manner, the battery 22 can be removed from the appliance 2 for use with another compatible kitchen appliance (such as a hand mixer, a hand blender, a countertop blender, a food processor, and the like) or to be replaced with a charged battery 22, such as when the particular battery 22 has become depleted. In this manner, a depleted battery can be charged using the charging receptacle 14 having mechanical components similar to the battery-receiving cavity 9 and terminals of the present appliance 2.

The battery 22 and corresponding electronic circuitry for controlling the operation of the appliance 2, including the operation of the motor (e.g., the drive motor) can be configured according to an architecture using a voltage in the range of about 18-20 V and in one implementation 20 V, with it being understood that the actual voltage supplied and utilized may vary within a range around the described desired operating voltage according to factors generally understood in the art. In this manner, the battery 22 can be a five-cell 20 V battery, although other configurations are possible, including that which is described in further detail below. In general, such a voltage may be sufficient for operation of the appliance 2 including operation of the motor, which is generally understood to be a direct-current (DC) motor and in one aspect a brushless DC motor, at an acceptable torque for typically-accepted use as a food processor within an acceptable operating speed.

Referring now to FIGS. 3-5B, the charging position that selectively delivers electrical current from the charging receptacle 14 to the battery 22 is illustrated. The charging receptacle 14 may define a base portion 50 having a greater width than a top surface 54 of the charging receptacle 14 to provide increased stability. In some aspects, the base portion 50 includes an upper surface 58, which generally does not contact the battery 22 and defines a gap 62 therebetween. A bottom surface 66 of the base portion 50 may be coupled with a slip-resistant pad 70, which may be made of any suitable material (e.g., a thermoplastic elastomer or a silicone).

The top surface 54 of the charging receptacle includes at least one indicator light 72, which may be in the form of one or more light-emitting diodes (LEDs). A controller of the device 10 may be configured to selectively illuminate the indicator light 72 according to a variety of charge states. According to various aspects, a white LED may be activated to indicate that the battery 22 is fully charged. Optionally, the white LED may be activated and deactivated in a flashing manner to indicate that the battery 22 is conducting a charging cycle that is not yet complete. A red LED may be activated and deactivated in a flashing manner to indicate that the battery 22 has incurred an error. In various aspects of the rechargeable battery assembly 10, a charging cycle may run for approximately 4 hours to fully charge the battery 22. However, it is within the scope of the present disclosure to utilize "fast charging" technology to decrease time to complete a charging cycle.

As illustrated, the charging receptacle 14 includes an AC adapter 74 and a cable 78, which electrically couples the AC adapter 50 to the plurality of base terminals 18. The AC adapter 74 is in the form of an external power supply configured to derive a required voltage and power from the mains power to the charging receptacle 14. The charging receptacle 14 may include a cord wrap 82 defining a track 86 configured to receive and retain a length of the cable 78. Further, the cord wrap 82 may define a notch 90 configured to receive a width of the wire 78 to retain the length of the wire 78 around the track 86.

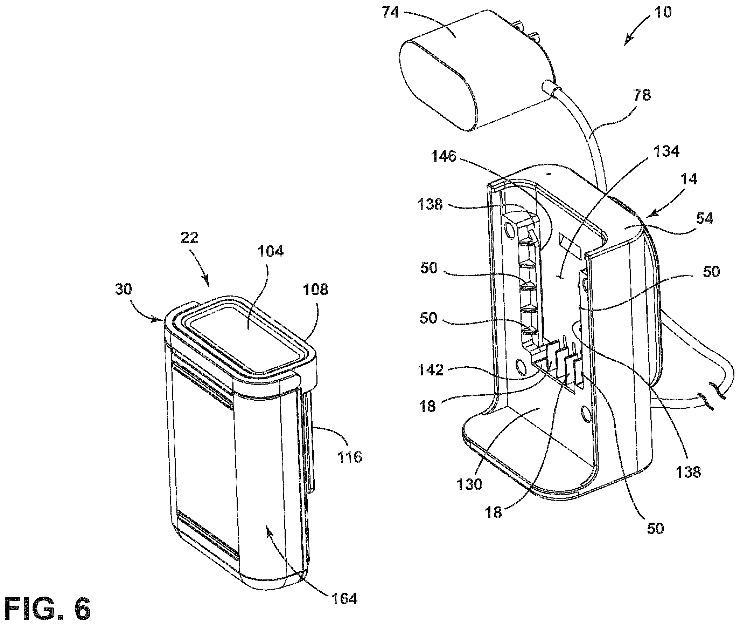

Referring now to FIGS. 6-8, the illustrated battery 22 includes a top surface 104 having an outer edge 108, which may be in the form of a perimeter, and a rear surface 112 positioned inset from the outer edge 108 of the top surface 104. A back plate 116 may project from the rear surface 112 of the battery 22 and extend substantially to the outer edge 108 of the top surface 104. The rear surface 112 and the back plate 116 may form an interface defining a pair of vertical channels 120. Additionally, a pair of stops 124 may be formed at upper ends of the pair of vertical channels 120.

Still referring to FIGS. 6-8, the illustrated charging receptacle 14 includes a front surface 130 defining a recess 134 limited by a pair of sidewalls 138 and a bottom wall 142. A pair of flanges 146 may project generally perpendicular from the pair of sidewalls 138, and a plurality of ribs 150 may be coupled to the pair of flanges 146 and the pair of sidewalls 138. The pair of flanges 146 and the plurality of ribs 150 on the charging receptacle 14 may be configured to slidingly mate with the pair of vertical channels 120 on the battery 22. Further, the front surface 130 of the charging receptacle 14 may define a pair of ledges 154 configured to abut the pair of stops 124 on the battery 22 in the charging position. In this way, the pair of ledges 154 form a shelf configured to limit downward movement of the battery 22 onto the charging receptacle along an installation axis 160.

The plurality of base terminals 18 on the charging receptacle 14 may extend from the bottom wall 142. While described as base terminals 18 and battery terminals 26, it is understood that whether or not the electrical terminals 18 and 26 "provide" or "receive" power depends upon the position of the battery 22 within the resulting circuit. In this way, the base terminals 18 and battery terminals 26 are configured as such in the charging position where the battery 22 is coupled with the charging receptacle 14. To the contrary, in the installation position where the battery 22 is coupled with an appliance, the electrical base terminals 18 on the battery 22 may supply current to corresponding electrical terminals on the appliance. Optionally, the charging receptacle 14 may be configured to receive two or more batteries 22. For example, the front surface 130 of charging receptacle 14 may define two recesses 134 in order to accommodate two batteries 22. In specific examples, the recesses 134 may be formed side by side.

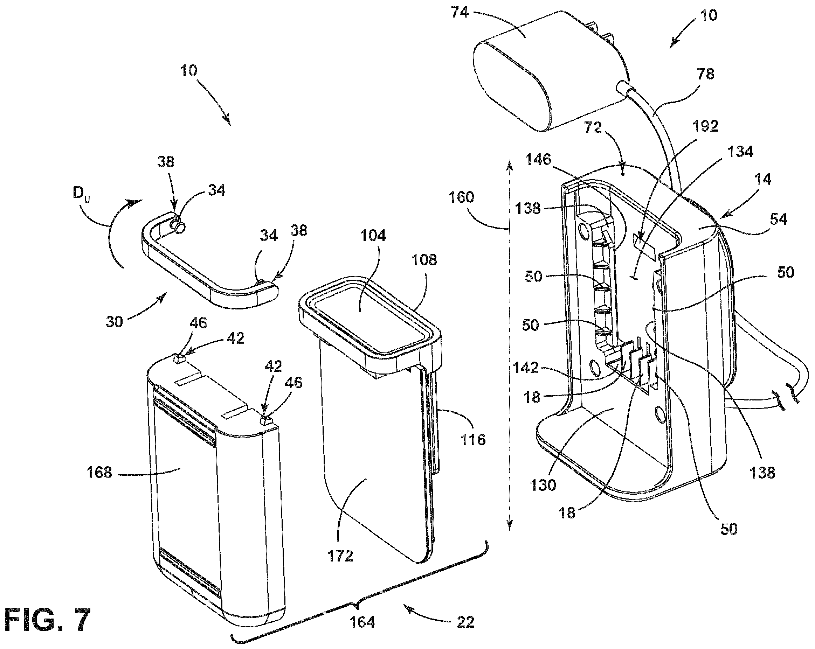

According to various aspects of the device, as exemplified in FIG. 7, the battery 22 may include an outer case, or housing 164, to which the handle 30 is rotationally mounted. In certain aspects of the device, the housing 164 includes a front portion 168 coupled with a rear portion 172. The rear portion 172 may include the top surface 104, and the front portion 168 may be disposed thereunder. Rotation of the handle 30, which may include an upward direction, Du, can serve to extract, or facilitate the extraction of, the battery 22 from the charging receptacle 14.

The handle 30 may be attached to the battery 22 by various linkages, which may include the pair of biasing shafts 34 and the pair of ramps 42. The bearing surface 46 defined by the ramps 42 may include a curvature configured to receive the biasing shaft 34. In addition, the biasing shaft 34 may include a cap 176 having a diameter wider than a diameter of the biasing shaft 34 to limit transverse movement of the handle 30 with respect to the ramps 42. In addition, the top surface 104 may serve to limit vertical movement of the handle 30 with respect to the ramps 42. During operation of the handle 30, the user can rotate the handle 30 about the biasing shafts 34 and exert a pulling force thereon such that the biasing shafts 34 engage the bearing surface 46 of the ramps 42. Engagement of the biasing shafts 34 with the bearing surface 46 allows the user to exert a biasing force against the bearing surface 46, which may cause compression of a resilient component (e.g., a spring). In this way, the handle 30 may be "spring loaded" such that upon release of the pulling force by the user on the handle 30, the handle 30 may return to an initial position (e.g., flat against the front portion 168 of the housing 164). As the handle 30 rotates upward toward a vertical orientation, the biasing shafts 34 pry the battery 22 away from the charging position to overcome the interface with charging receptacle 14. In some aspects, the handle 30 forms a securing mechanism that can begin to disengage at a rotational angle of approximately 45° and fully disengage at a rotational angle of approximately 60°. Accordingly, when the securing mechanism of the battery 22 is disengaged, the user may separate the battery 22 from the charging position within the charging receptacle 14.

In this way, use of the handle 30, according to various aspects, converts a rotational motion into an axial or linear motion of the biasing force, which provides a counteracting force that biases the battery 22 away from an engaged position (e.g., the charging position or the installed position). The engaged position includes an interface, which can be formed through the engagement of various mating electrical terminals, such as the base terminals 18 and the battery terminals 26, which are defined within each of the battery 22 and the charging receptacle 14. The cooperative engagement of the electrical terminals 18, 26 form a close engagement or contact that is used to secure the battery 22 in the charging position and the installed position. Due to this close engagement, separating the battery 22 from these positions typically requires a significant force to overcome an engagement force of the engaged positions. However, once the electrical terminals 18, 26 are disengaged, the battery 22 can be removed from the remainder of the charging receptacle 14 with significantly less effort. It is to be noted that the size of the base terminals 18 and the battery terminals 26, including length, width and thickness, has been chosen to generate an appropriate engagement force such that operation of the appliance, or charging receptacle 14, when using the battery 22 does not cease (e.g., the current supply becomes interrupted) yet the user may separate the battery 22 from the engagement positions without significant effort. Further, the battery terminals 26 can include pairs of metallic elements that are biased toward each other to receive the tab-like base terminals 18 under pressure to maintain consistent contact. A biasing pressure of the contact between the base terminals 18 and the battery terminals 26 can be generally less than similar arrangements in batteries used in connection with, for example power tools or the like. For example, the biasing pressure of the contact between the base terminals 18 and the battery terminals 26 may be in a range of approximately 15-20 N, while power tools typically include a biasing pressure of contact between electrical connections of approximately 20-30 N.

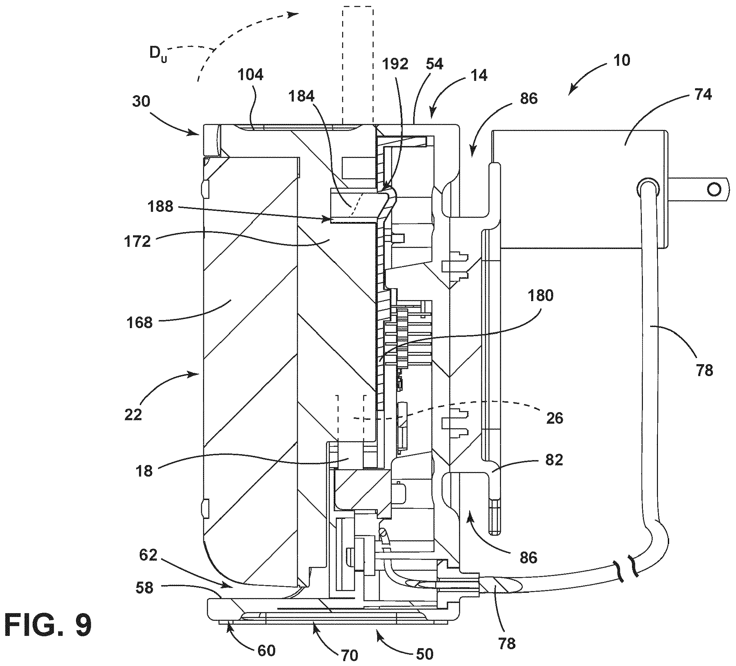

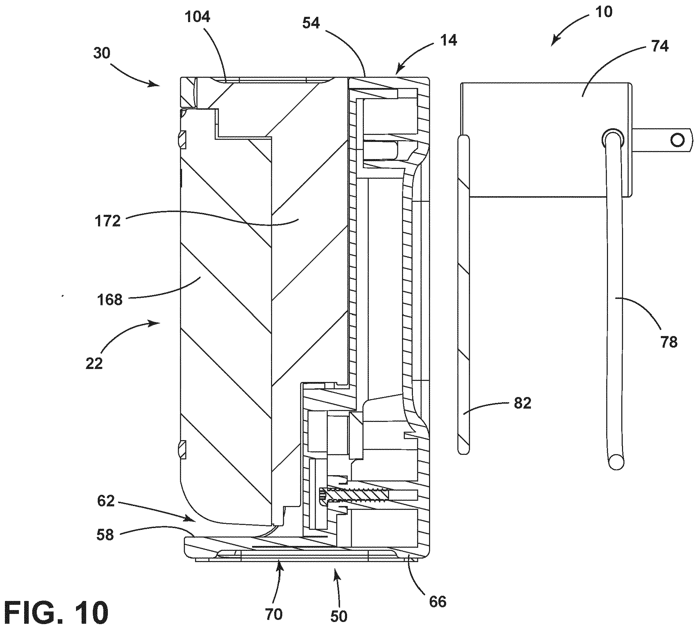

Referring now to FIGS. 9 and 10, internal components of the rechargeable battery assembly 10 in the charging position are more clearly illustrated. The charging receptacle 14 may include a printed circuit board (PCB) 180 configured to support various electronic components of the charging receptacle 14 (e.g., LEDs, firmware, etc.). In some examples, the charging receptacle 14 includes firmware configured to control current supplied to the rechargeable battery assembly 10 to limit current supplied over a predetermined amount of time from an initial current measurement.

According to optional aspects of the device, as exemplified in FIGS. 9 and 10, the handle may be operably coupled with a rod 184 disposed within a recess 188 defined in the rear surface 112 of the battery 22. The rod 184 may be slideable relative to the recess 188 in order to be received within a detent 192 defined by the front surface 130 of the charging receptacle 14. In some examples, the rotation of the handle 30, which may include the upward direction, D_{U}, can serve to slide the rod 184 from an extended position (e.g., received at least partially within the recess 192) to a retracted position (e.g., the rod 184 is removed from the recess 192 and is directed further in toward the recess 188) such that the battery 22 may be released from the charging receptacle 14. In this way, the handle 30 forms a securing mechanism that can begin to disengage (e.g., retract the rod 184) at a rotational angle of approximately 45° and fully disengage at a rotational angle of approximately 60°.

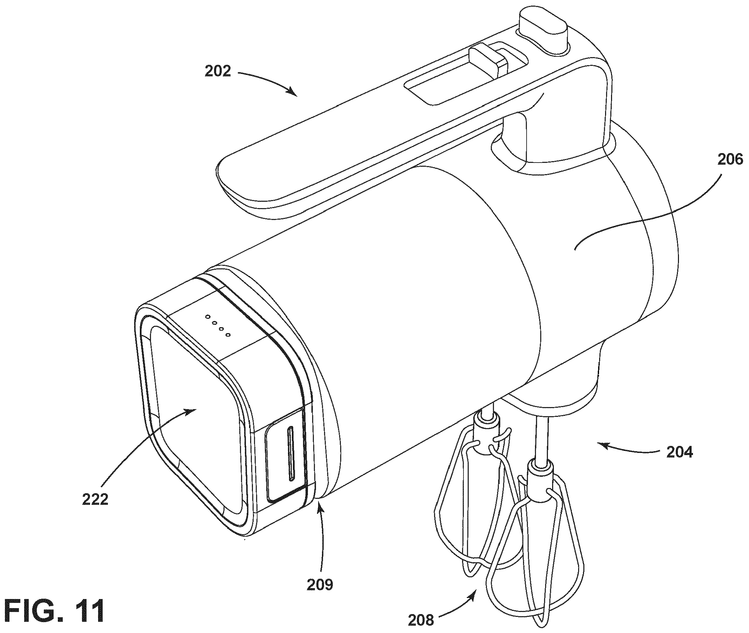

FIGS. 11-14 illustrate another exemplary rechargeable battery assembly 210 for a kitchen appliance 202. The rechargeable battery assembly 210 includes a charging base 214 according to a standardized connection specification. In the illustrated example, the standardized connection specification is the USB-C connection specification provided by the USB Implementation Form ("USB-IF"). In this implementation, the charging base 214 can include a USB-C plug 216 (i.e., a USB-C male connector) extending from a surface 252 along a body 220. The body 220 can further have a pair of notches 224 disposed adjacent a perimeter 228 thereof. The rechargeable battery assembly 210 further includes a battery 222 including a mating receptacle according to the selected standardized connection specification, which in the present example can be a USB-C receptacle 230 (also referred to as a "port") configured to mate with the USB-C plug 216 to selectively engage the battery 222 having a plurality of battery terminals 226 with the charging base 214. In this manner, the battery 222 can be charged by receiving a USB-C plug end of a USB cable configured at least for power delivery and connected with a compatible adapter or "brick" without being connected to the charging base 214. Tabs 232 are also included with the battery 222 and configured to move inwardly by initial engagement with corresponding notches 224 of the pair of notches 224 in the charging base 214. Further, the tabs 232 are configured to move outward behind the corresponding notches 224 when the battery 222 is fully received in the charging base 214, thereby defining a charging position. The battery 222 further includes buttons 234 associated with the tabs 232. The buttons 234 are configured to move the tabs 232 inward for release from the notches 224 to remove the battery 222 from the charging position.

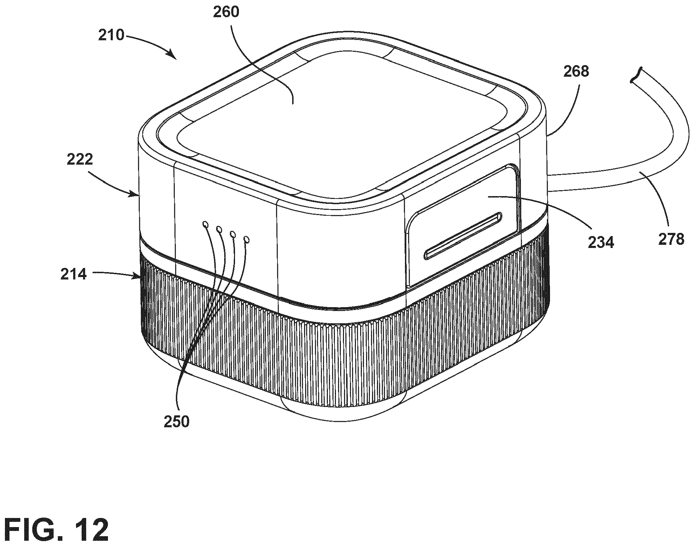

In the charging position, the charging base 214 can deliver an electrical current to the battery 222 for recharging the battery 222 (FIG. 12). In a similar manner, the battery 222 can be removed from the charging base 214 and coupled with the appliance 202 in an installed position to provide electrical current to an operable portion 204 of the appliance (FIG. 11). According to various aspects of the rechargeable battery assembly 210 described herein, the battery 222 can be utilized within any one of a variety of cordless appliances 202, including a suite of appliances where the battery 222 can be used interchangeably among particular ones of the suite of appliances. Such appliances 202 can be in the form of various countertop appliances, portable appliances, handheld appliances, and other similar household articles that can be utilized in a cordless and battery-operated configuration. In the example of FIG. 11, the appliance 202 is shown in the form of what is generally understood to be a hand mixer, which, in particular aspects, is further described in the co-pending, commonly-assigned U.S. Provisional Patent Application No. 63/376,174 and the U.S. Patent Application filed contemporaneously herewith under Attorney Docket No. SUB-15280A-US-NP, the entire contents of which are incorporated by reference herein. In various additional aspects, the appliance 202 can be in the form of an immersion blender, a food processor, or a blender as respectively described in the co-pending, commonly-assigned U.S. Provisional Patent Application Nos. 63/407,940, 63/407,820 and 63/315,572, and the U.S. Patent Applications filed contemporaneously herewith under Attorney Docket Nos. SUB-15280B-US-NP, SUB-15280C-US-NP, and SUB-15280E-US-NP, the entire contents of which are respectively incorporated by reference herein.

As is illustrated in FIG. 11, the appliance 202 may include a housing 206 that includes the operable portion 204, which may be in the form of a motor that operates a rotary interface 208. This rotary interface 208 can be in the form of a blade or other processing implement associated with, for example, a blender, mixer, chopper, or other food-processing portion of appliance 202. As can be appreciated, the use of the battery 222 to power the drive motor is such that the battery-powered appliance 202 described herein is operable without having to plug the appliance 202 into an external power source (such as a wall outlet or the like) and results in the disclosed appliance 202 being characterized as "cordless." In this manner, the appliance 202 can be placed and operated in any convenient location along the counter space provided within the kitchen, regardless of the proximity of such location to a power outlet or an available power outlet.

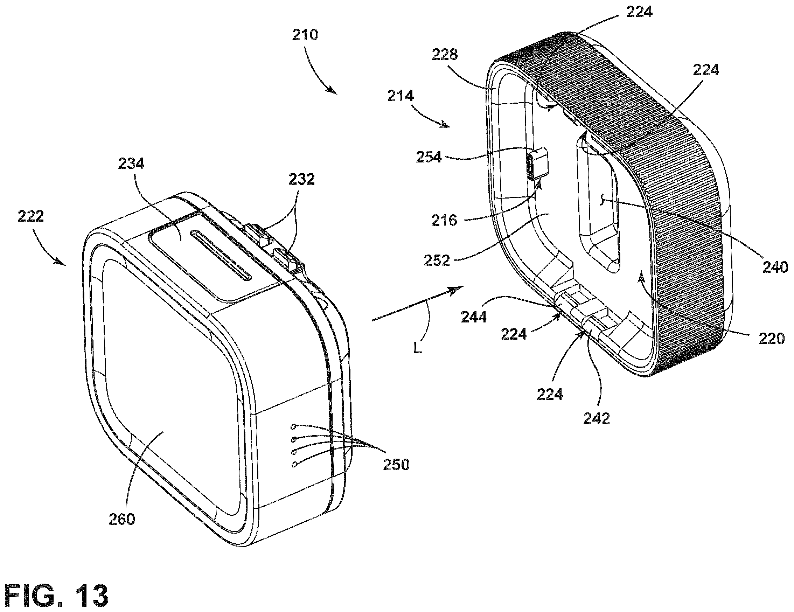

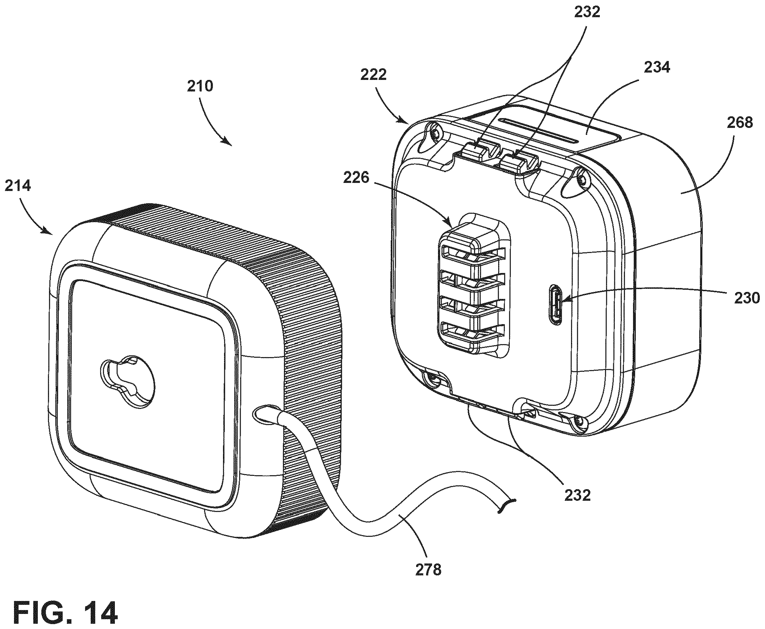

The appliance 202 also includes a battery interface, or battery-receiving cavity 209, that is in electrical communication with the operable portion 204. The battery-receiving cavity 209 receives and cooperatively maintains the battery 222 in the installed position. In this way, the battery 222 is selectively engaged with the battery-receiving cavity 209 to define the installed position within the appliance 202. The battery-receiving cavity 209 of the appliance 202 includes a similar configuration (e.g., corresponding architecture) as the charging base 214 (FIG. 13) in order to accommodate and electrically couple the battery 222. The battery terminals 226 are configured to align with terminals of the battery-receiving cavity 209 for electrical connection therewith. In this manner, the installed position places the battery terminals 226 of the battery 222 in engagement with at least one contact of the battery-receiving cavity 209 for delivering electrical current from the battery 222 to the motor of the operable portion 204. In specific examples, the battery 222 is adapted for a snap-fit arrangement with the battery-receiving cavity 209, where the battery is moved in a lateral direction toward the battery-receiving cavity 209 and pressed into engagement therewith. In this arrangement, terminals of the battery-receiving cavity 209 engage with the aligned battery terminals 226 (FIG. 14) for electrical connection with the battery 222 when fully received in the battery-receiving cavity 209.

The electrical connection can be facilitated by the connection of battery terminals 226 of the battery 222 with terminals of the appliance 202 that are exposed within the battery-receiving cavity 209. In this manner, the battery 222 can be removed from the appliance 202 for use with another compatible kitchen appliance (such as a hand mixer, a hand blender, a countertop blender, a food processor, and the like) or to be replaced with a charged battery 222, such as when the particular battery 222 has become depleted. Therefore, a number of available compatible batteries 222 can be selected and attached with the appliance 202 for continued use. A depleted battery can be charged using the charging base 214, which can include mechanical components and corresponding architecture similar to the battery-receiving cavity 209 of the present appliance 202.

Referring now to FIGS. 12-14, the battery 222 is adapted for a snap-fit arrangement with charging base 214 in a similar manner as previously described with respect to the battery-receiving cavity 209 of the appliance 202. Accordingly, in the event that a user is holding the charging base 214 or the charging base is mounted to a wall, or the like, the battery 222 can be moved in a lateral direction, L, toward the charging base 214 and pressed into engagement therewith. In this arrangement, the USB-C plug 216 of the charging base 214 engages with the aligned USB-C receptacle 230 of the battery 222 for electrical connection when the battery 222 is fully seated, or received, in the charging base 214 (FIG. 12). As illustrated, the battery 222 includes the tabs 232, which may be spring-loaded, or having another similar flexible arrangement, and urged outwardly. Due to the flexible nature of the tabs 232, the tabs 232 can be moved inwardly by initial contact and engagement with corresponding notches 224 in the charging base 214 and then can be moved outward behind the notches 224 when the battery 222 is fully received in the charging base 214 for fixed retention therewith. When the battery 222 is to be removed, buttons 234 associated with the tabs 232 can be depressed to push, or move, the tabs 232 inward, thereby releasing them from the notches 224.

Referring to FIGS. 13 and 14, the charging base 214 may define a recess 240 defined in the body 220 and sized to passively receive the plurality of battery terminals 226 (i.e., with no electrical connection between the charging base 214 and the battery terminals 226). In this manner, the battery 222 may be fully seated along the perimeter 228 of the body 220. Optionally, the recess 240 may include terminals configured to electrically couple the battery terminals 226 such that the USB-C connection need not be included. In this way, a fast-charging arrangement may also be implemented. The pair of notches 224 may be disposed on opposing sides of the body 220 of the charging base 214. In some examples, the charging base 214 includes more than two opposing notches 224, which is illustrated in FIG. 13. As illustrated, the charging base 214 may include a first pair of notches 224 spaced from a second pair of notches 224. Further, the notches 224 may include any suitable configuration to engage and retain the battery 222, which may include indentations 242 having ramped portions 244. Further, the USB-C plug 216 may extend from a battery interface surface 252. In some examples, an exterior 254 of the USB-C plug is molded with charging base 214, thereby forming a unitary piece with the battery interface surface 252.

As illustrated, the battery 222 includes at least one indicator light 250, which may be in the form of a plurality of light sources 250 (e.g., LEDs). The plurality of light sources 250 are electrically coupled with control circuitry. In some examples, the control circuitry is in electrical communication with at least one of the buttons 234 and the control circuitry is configured to selectively activate the plurality of light sources 250 upon receipt of a predetermined input (e.g., a push force closing a circuit) from the at least one of the buttons. In some examples, depressing one or both of the buttons 234 during installation of the battery 222 on the appliance 202 causes deflection of tabs 232 and activation of the plurality of light sources 250. The battery 222 may be configured to selectively illuminate the indicator lights 250 according to a variety of charge states. According to various aspects, all of the plurality of light sources 250 may be activated to indicate that the battery 222 is fully charged. If fewer than all of the plurality of light sources 250 are illuminated, a partially charged state may be indicated (e.g., successive illumination corresponds with intermediate recharging states). In this way, a number of light sources 250 illuminated may correspond to a charge state. Therefore, in various aspects of the rechargeable battery assembly 10 "fast charging" technology may be utilized to decrease time to complete a charging cycle, including, but not limited to, in connection with a fast-charger arrangement, as discussed above.

The charging base 214 can include a cable 278, which may be connected to a USB-A connector, an AC adapter 74, or similar external power supply connector (e.g., configured at least for power delivery by the example USB-C connectors) and configured to derive a required voltage and power from the mains power to the charging base 214, but is not limited to such a configuration. The external power supply electrically couples the wire 278 to the USB-C plug 216. Further, it is understood that whether the electrical battery terminals 226 "provide" or "receive" power depends upon the position of the battery 222 within the resulting circuit. In this way, the battery terminals 226 are configured as such in the installation position where the battery 222 is coupled with the appliance 202 and battery terminals 226 may supply current to the corresponding electrical terminals on the appliance 202.

The appliance 202 (FIG. 11) is configured to operate under the power of a generally smaller battery 222 than the 20 V version of the battery 22 previously discussed. In this respect, the battery 222 may be smaller in output, such as by being configured for 12V operation. Additionally, because a smaller output battery 222 provides a lower current to the associated device, the battery 222 can also be smaller in size, while still providing the desired duration of power supply and corresponding use of the appliance 202. Accordingly, the battery 222 shown in FIGS. 11-14 in connection with appliance 202 is smaller in size than the battery 22 shown in connection with other examples of the appliance 2. The battery-receiving cavity 209 on the housing 206 of the appliance 202 is, accordingly, smaller than those of the other appliances 2 discussed herein. Likewise, the charging base 214 on rechargeable battery assembly 210 is, accordingly, smaller than that of the rechargeable battery assemblies 210 discussed herein.

Outside of circuitry and motor modifications that correspond with the 12 V architecture, the appliance 202 can use similarly-adapted electronic architecture to the appliances 2, discussed above. In this respect, it is noted that the control circuitry associated with appliance 202 may be adapted to work with a smaller motor than that included in the above-described appliances 2 and/or operate speeds that are appropriate for the needs of such a smaller-scale appliance.

According to one aspect of the present disclosure, a rechargeable battery assembly for a kitchen appliance includes a charging base and a battery. The charging base includes a plug according to a standardized connection specification and a body having a pair of notches disposed adjacent a perimeter thereof. The battery includes a receptacle according to the standardized connection specification and configured to mate with the plug to selectively engage the battery with the charging base, a plurality of battery terminals, a plurality of tabs, and first and second buttons. The plurality of tabs are configured to move inwardly by initial engagement with corresponding notches in the charging base and to move outward behind the corresponding notches when the battery is fully received in the charging base, thereby defining a charging position. The first and second buttons are associated with respective ones of the plurality of tabs. Further, the first and second buttons are each configured to move the respective tabs inward for release from the notches to remove the battery from the charging position.

According to another aspect, the battery terminals are configured to align with terminals of a battery-receiving cavity of an appliance for electrical connection therewith.

According to another aspect, the charging base further includes a recess defined in the body and sized to passively receive the plurality of battery terminals.

According to another aspect, the pair of notches are on opposing sides of the body of the charging base.

According to another aspect, the pair of notches include indentations having ramped portions to engage and retain the battery.

According to another aspect, the battery further includes a plurality of light sources and control circuitry. The control circuitry is in electrical communication with at least one of the buttons, and the control circuitry is configured to selectively activate the plurality of light sources upon receipt of a predetermined input from the at least one of the buttons.

According to another aspect, the predetermined input includes deflection of the tabs.

According to another aspect, the standardized connection specification is a USB-C connection.

According to another aspect, the battery is configured for a 12 V operation.

According to another aspect of the present disclosure, a rechargeable battery assembly for a kitchen appliance includes a charging base and a battery. The charging base includes a body defining a perimeter edge and a recess therein and a pair of notches disposed adjacent the perimeter edge. The battery includes a plurality of battery terminals disposed within the recess of the charging base, and a receptacle configured to mate with the charging base when the battery is fully received in the charging base, thereby defining a charging position.

According to another aspect, the battery is configured in a snap-fit arrangement with the charging base.

According to another aspect, the battery is configured for a 12 V operation.

According to another aspect, the battery further includes a pair of flexible tabs and a pair of buttons associated with the tabs. The pair of buttons is configured to move the tabs inward for release from the charging base.

According to another aspect, the charging base further includes a pair of notches disposed adjacent the perimeter. The pair of notches is configured to retain the pair of flexible tabs on the battery in the charging position.

According to another aspect, the rechargeable battery assembly further includes a first pair of tabs spaced from a second pair of tabs on the battery, and a first pair of notches spaced from a second pair of notches on the charging base. The first pair of tabs engage with the first pair of notches, and the second pair of tabs engage with the second pair of notches to retain the battery in the charging position.

According to yet another aspect of the present disclosure, a rechargeable battery assembly for a kitchen appliance includes a charging base and a battery. The charging base includes a plug according to a standardized connection specification and a body having at least one notch. The battery includes a receptacle according to a standardized connection specification and configured to mate with the plug to selectively engage the battery with the charging base, a plurality of battery terminals, at least one flexible tab configured to engage with the at least one notch in the charging base when the battery is fully received in the charging base, thereby defining a charging position, and at least one button associated with the at least one tab, the at least one button configured to flex the at least one tab.

According to another aspect, the battery terminals are configured to align with terminals of a power-receiving cavity of an appliance for electrical connection therewith.

According to another aspect, the charging base further includes a recess defined in the body and sized to passively receive the plurality of battery terminals.

According to another aspect, the battery further includes a plurality of light sources and control circuitry. The control circuitry is in electrical communication with the at least one button and the control circuitry is configured to selectively activate the plurality of light sources upon deflection of the at least one flexible tab.

According to another aspect, the standardized connection specification is a USB-C connection.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A rechargeable battery assembly (10, 210) for a kitchen appliance (2, 202), comprising:
a charging base (14, 214), comprising:
a plug (216) according to a standardized connection specification; and
a body (220) having at least one notch (224); and
a battery (22, 222), comprising:
a receptacle (230) according to the standardized connection specification configured to mate with the plug (216) to selectively engage the battery (22, 222) with the charging base (214);
a plurality of battery terminals (26, 226);
at least one flexible tab (232) configured to engage with the at least one notch (224) in the charging base (14, 214) when the battery (22, 222) is fully received in the charging base (14, 214), thereby defining a charging position; and
at least one button (234) associated with the at least one flexible tab (232), the at least one button (234) configured to flex the at least one flexible tab (232).

2. The rechargeable battery assembly (10, 210) for a kitchen appliance (2, 202) of claim 1, wherein the battery (22, 222) is configured in a snap-fit arrangement with the charging base (14, 214).

3. The rechargeable battery assembly (10, 210) for a kitchen appliance (2, 202) of either one of claims 1 or 2, wherein the at least one tab (232) flexes inward for release from the at least one notch (224) to remove the battery (22, 222) from the charging position.

4. The rechargeable battery assembly (10, 210) for a kitchen appliance (2, 202) of any one of claims 1-3, further comprising:
a pair of notches (224) disposed adjacent a perimeter of the body (220) of the charging base (14, 214).

5. The rechargeable battery assembly (10, 210) for a kitchen appliance (2, 202) of claim 4, wherein the pair of notches (224) are on opposing sides of the body (220) of the charging base (14, 214).

6. The rechargeable battery assembly (10, 210) for a kitchen appliance (2, 202) of any one of claims 1-5, wherein
the at least one flexible tab (232) comprises a pair of flexible tabs (232), and
the at least one button (234) comprises a pair of buttons (234) associated with the pair of flexible tabs (232),
the pair of buttons (234) being configured to move the tabs (232) inward for release from the charging base (14, 214).

7. The rechargeable battery assembly (10, 210) for a kitchen appliance (2, 202) of any one of claims 1-6, wherein:
the at least one flexible tab (232) comprises a first pair of tabs (232) spaced from a second pair of tabs (232) on the battery (22, 222); and
the at least one notch (224) comprises a first pair of notches (224) spaced from a second pair of notches (224) on the charging base (14, 214),
wherein the first pair of tabs (232) engage with the first pair of notches (224) and the second pair of tabs (232) engage with the second pair of notches (224) to retain the battery (22, 222) in the charging position.

8. The rechargeable battery assembly (10, 210) for a kitchen appliance (2, 202) of any one of claims 1-7, wherein the at least one notch (224) includes indentations (242) having a ramped portion (244) to engage and retain the battery (22, 222).

9. The rechargeable battery assembly (10, 210) for a kitchen appliance (2, 202) of any one of claims 1-8, wherein the battery terminals (26, 226) are configured to align with terminals of a battery-receiving cavity (9, 209) of an appliance (2, 202) for electrical connection therewith.

10. The rechargeable battery assembly (10, 210) for a kitchen appliance (2, 202) of either of any one of claims 1-9, wherein the charging base (14, 214) further comprises:
a recess (240) defined in the body (220) and sized to passively receive the plurality of battery terminals (26, 226).

11. The rechargeable battery assembly (10, 210) for a kitchen appliance (2, 202) of any one of claims 1-10, wherein the battery (22, 222) further comprises:
a plurality of light sources (72, 250); and
control circuitry, wherein the control circuitry is in electrical communication with the at least one button (234) and the control circuitry is configured to selectively activate the plurality of light sources (72, 250) upon receipt of a predetermined input from the at least one button (234).

12. The rechargeable battery assembly (10, 210) for a kitchen appliance (2, 202) of claim 11, wherein the predetermined input includes deflection of the at least one tab (232).

13. The rechargeable battery assembly (10, 210) for a kitchen appliance (2, 202) of any one of claims 1-12, wherein the standardized connection specification is a USB-C connection.

14. The rechargeable battery assembly (10, 210) for a kitchen appliance (2, 202) of any one of claims 1-13, wherein the battery (22, 222) is configured for a 12 V operation.
